(19) Europäisches Patentamt
European Patent Office
Office européen des brevets

(11) EP 1 149 809 A1

(12) **EUROPEAN PATENT APPLICATION**

(43) Date of publication:
**31.10.2001 Bulletin 2001/44**

(51) Int Cl.$^7$: **C04B 26/18**, C08G 64/02

(21) Application number: **01201263.9**

(22) Date of filing: **05.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.04.2000 IT MI200731**

(71) Applicant: **Great Lakes Chemical (Europe) GmbH**
**8500 Frauenfeld (CH)**

(72) Inventors:
- **Renzi, Fiorenzo**
  **48100 Cervia (Ravenna) (IT)**
- **Casilli, Nicola**
  **48100 Ravenna (IT)**
- **Forestieri, Roberto**
  **48100 Ravenna (IT)**
- **Nodari, Nereo**
  **48100 Ravenna (IT)**

(74) Representative: **De Gregori, Antonella et al**
**Ing. Barzano & Zanardo Milano S.p.A.**
**Via Borgonuovo 10**
**20121 Milano (IT)**

# (54) Composition forming artificial marble or granite

(57) Composition forming artificial marble or granite, comprising:

(A) a liquid and polymerizable poly(allyl carbonate) of a polyol or a mixture of polyols, as organic ligand; and
(B) a mineral filler of a carbonate nature in the case of marble, or of a silicate or silica nature in the case of granite;

characterized in that the polymerization of the poly(allyl carbonate) (A) is carried out in the presence of a peroxide polymerization initiator belonging to the group of perketals (C).

EP 1 149 809 A1

## Description

The present invention relates to a composition forming artificial marble or granite.

More specifically, the present invention relates to a composition forming artificial marble or granite comprising, as organic ligand, a liquid and polymerizable poly(allyl carbonate) of a polyol, a mineral filler, and a polymerization initiator of the perketal type, a process for transforming said composition into artificial marble or granite.

The present invention also relates to the artificial marble or granite consisting of the above composition.

Artificial marble and granite in the form of blocks or panels, generally consisting of a mineral filler dispersed in a polymeric matrix, are known in the art and are described, for example, in the following patents: U.S. 4,698,010, DE 2,054,168 and IT 1,056,388 and in patent application JP 04/306219. A polyester or acrylic resin is generally used as polymeric matrix (organic ligand) for the purpose, which is mixed with the inorganic filler obtaining a mixture which is subjected to hardening following compacting treatment. Unfortunately, when a polyester resin is used, the end-product obtained cannot be used externally, owing to the poor aging resistance, especially aging caused by ultraviolet radiation. When an acrylic resin is used, on the other hand, there are disadvantages mainly deriving from the use of a polymerizable (methylmethacrylate) monomer which is volatile and toxic.

Artificial marble consisting of the product obtained from the polymerization of a poly(allyl carbonate) (organic ligand) and a mineral filler, are also described in the known art.

Patent application JP 03/269046 describes an artificial marble consisting of the product obtained from the polymerization of a mixture of ethyleneglycol bis(allyl carbonate) monomer and polymer (the polymer is obtained using t-butyl-perpivalate as polymerization initiator) and aluminum oxide ($Al_2O_3$) as mineral filler. In the absence of a prepolymer, there is an incomplete curing.

Patent application JP 03/86710 describes an artificial marble consisting of the product obtained from the polymerization of a mixture of diethyleneglycol bis(allyl carbonate) monomer and tripropyleneglycol dimethacrylate and an inorganic mineral filler. This marble has an improved abrasion resistance (measured according to the "Taber" method) with respect to the mixture without methacrylate.

Patent application JP 04/120103 describes an artificial marble consisting of the product obtained from the polymerization of a mixture of diethyleneglycol bis(allyl carbonate), tripropyleneglycol dimethacrylate, styrene and a mineral filler. Also in this case, the marble obtained has an improved abrasion resistance (measured according to the "Taber" method).

Patent application JP 63/246660 describes an artificial marble consisting of a resinous ligand and a "balloon-shaped" inorganic filler having a particle size ranging from 10 μm to 100 μm.

U.S. patent 5,280,051 describes an artificial marble consisting of the product obtained from the polymerization of a poly(allyl carbonate) of a polyol and a mineral filler, having a better colour and improved aging resistance. In this composition, however, a peroxide polymerization initiator is used, belonging to the group of percarbonates, which has various disadvantages due to its highly dangerous nature and excessively long polymerization times.

The Applicant has now found that the use of a peroxide polymerization initiator belonging to the group of perketals allows compositions to be obtained, which can be easily transformed into artificial marble or granite having an optimum aesthetic appearance, good mechanical properties and an improved aging resistance with respect to those of the known art. The polymerization times, moreover, are considerably reduced.

An object of the present invention therefore relates to a composition forming artificial marble or granite, comprising:

(A) a liquid and polymerizable poly(allyl carbonate) of a polyol or a mixture of polyols, as organic ligand; and
(B) a mineral filler of a carbonate nature in the case of marble, of a silicate or silica nature in the case of granite;

characterized in that the polymerization of the poly(allyl carbonate) (A) is carried out in the presence of a peroxide polymerization initiator belonging to the group of perketals (C).

According to a preferred embodiment of the present invention, the poly(allyl carbonate) (A) is present in the above composition in a quantity ranging from 4 to 50 parts by weight for every 100 parts by weight of the sum of the poly(allyl carbonate) (A) and mineral filler (B). More preferably, the poly(allyl carbonate) (A) is present in the composition in a quantity ranging from 6 to 20 parts by weight for every 100 parts by weight of the sum of said poly(allyl carbonate) (A) and mineral filler (B).

The poly(allyl carbonate) (A) useful for the purposes of the present invention, can generally consist of at least one poly(allyl carbonate) of a polyol containing from 2 to 6 hydroxyl groups in the molecule, in the form of a monomer and/or oligomer.

Polyols which can be used for the purposes of the present invention can be selected, for example, from:

- ethylene glycol, propylene glycol, diethylene glycol, dipropylene glycol, triethylene glycol, tetraethylene glycol,

pentanediol, hexanediol, dimethanolcyclohexane, neopentyl glycol, tricyclic dimethanol decane, etc.;

- glycerol, trimethylolpropane, tris(hydroxyethyl)isocyanurate, etc.;
- pentaerythritol, di- or tri-methylolpropane, etc.;
- dipentaerythritol.

Mixed poly(allyl carbonates), i.e. containing radicals of two or more different polyols in the same molecule, can also be used for the purposes of the present invention.

According to a preferred embodiment of the present invention, the poly(allyl carbonate) (A) is bis(allyl carbonate) of diethylene glycol monomer having formula (I):

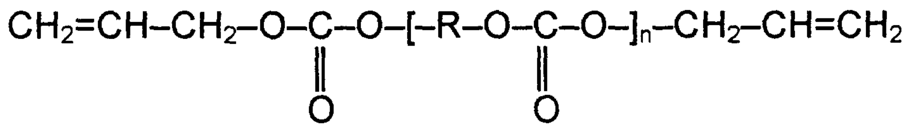

(I)

wherein R is the radical of diethylene glycol and n is 1.

The bis(allyl carbonate) of diethylene glycol monomer can be prepared by the reaction of diethylene glycol with diallyl carbonate as described, for example, in patent EP 35,304.

According to another preferred embodiment of the present invention, the poly(allyl carbonate) (A) is the transesterification product of a mixture of diallyl carbonate, diethylene glycol and tris(hydroxyethyl)isocyanurate as described, for example, in patent application EP 302,537.

According to a further preferred embodiment of the present invention, the poly(allyl carbonate) (A) is the transesterification product of a mixture of diallyl carbonate, diethylene glycol and pentaerythritol as described, for example, in patent application EP 302,537.

The mineral fillers (B) which can be used for the purposes of the present invention are carbonate, silicate or silica mineral fillers. Said mineral fillers can have various particle sizes.

Examples of mineral fillers (B) having a gross particle size are: natural marble, granite, siliceous sand, etc.

Examples of mineral fillers (B) having a fine particle size are: products deriving from the fine grinding of natural marble, granite or siliceous sand, or, quartz, alumina hydrate, talc, silicas, graphite, or their mixtures, etc.

The mineral fillers (B) with a fine particle size, can be substituted (up to about 50% by weight) by glass fiber, of the short or long type. Said mineral fillers having a fine particle size and said glass fibers have the function of filling the interstices between the gross fillers in the end conglomerate and of therefore providing the material obtained at the end of the processing with compactness and mechanical resistance. In addition, some mineral fillers can have a particular function, for example, in the case of alumina hydrate which, as is known, is capable, among other things, of giving flame-resistance to the material containing it.

The above mineral fillers (B), having a fine or gross particle size, can be pretreated with compatibilizing agents belonging to the group of silanes such as, for example, $\gamma$-methacryloxypropyltriethoxysilane, vinyltriethoxysilane, trimethylsilane, etc. These compatibilizing agents are capable of closely binding the organic matrix to the mineral filler producing a more compact and continuous structure in the artificial marble or granite with a consequent further improvement in their mechanical characteristics.

Peroxide polymerization initiators belonging to the group of perketals (C) which can be used for the purposes of the present invention are selected from compounds belonging to the group of gemdiperoxides having general formula (II):

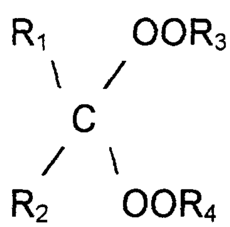

(II)

wherein $R_3$ represents a linear or branched tertiary alkyl group and, preferably, t-butyl or t-amyl; $R_1$ and $R_2$ each independently represent a linear or branched alkyl group such as, for example, methyl, ethyl, propyl and butyl, said alkyl group possibly carrying non-interfering functional groups such as, for example, an alkyl ester group at the chain-end; or, $R_1$ and $R_2$, together with the carbon atom to which they are bound, form a cycloalkylene group, preferably a cyclohexylidene group, said cycloalkylene group optionally carrying one or more alkyl substituents, preferably from 1 to 3 methyl groups.

Specific examples of gem-diperoxides useful for the purposes of the present invention, but in no way limiting its scope, are: 2,2-di-(t-butylperoxy)butane, n-butyl-4,4-di-(t-butylperoxy)valerate, ethyl-3,3-di-(t-butylperoxy)valerate, 1,1-di-(t-butylperoxy)cyclohexane, 1,1-di-(t-butylperoxy)-2-methylcyclohexane, 1,1-di-(t-butylperoxy) -3,3,5-trimethylcyclohexane, 1,1-di-(t-amylperoxy)cyclohexane, 1,1-di-(t-amylperoxy)-2-methylcyclohexane, etc.

Cyclic gem-diperoxides and cyclic gem-triperoxides such as, for example: 3,3,6,6-tetramethyl-1,2,4,5-tetraoxane, 3,6-diethyl-3,6-dimethyl-1,2,4,5-tetraoxane, 7,8,15,15-tetraoxadispiro[5.2.5.2]hexadecane, 3,3,6,6,-9,9-hexamethyl-1,2,4,5-tetraoxycyclononane, etc., can also be used for the purposes of the present invention.

The peroxide polymerization initiator belonging to the group of perketals (C) is present in the compositions, object of the present invention, in a quantity ranging from 0.5% to 5% by weight, preferably from 1% to 2% by weight.

The composition forming artificial marble and granite, object of the present invention, may contain effective quantities of UV-light stabilizing additives such as, for example, hydroxybenzophenones, benzotriazoles, sterically hindered amines (HALS) of the monomeric and/or polymeric type, or their mixtures, etc. Mixtures of hydroxybenzophenones and sterically hindered amines such as, for example, the mixture of Lowilite® 22 (hydroxybenzophenone commercialized by Great Lakes Chemical Corporation) and Uvasil® 299 (sterically hindered amine commercialized by Great Lakes Chemical Corporation), are preferred for the purpose.

Furthermore, the composition forming artificial marble or granite, object of the present invention, may optionally contain limited quantities of one or more silanes in substitution of or in addition to those deposited on the mineral filler. Other additives which can be optionally added in limited quantities are: dispersing and wetting agents of mineral fillers, deaerating agents, viscosity-depressing agents, antisediment agents, internal detaching agents (particularly of the siliconic type) to facilitate the detachment of the end-product from the mould, titanium dioxide and coloured pigments of the organic or, preferably, inorganic type, flame-retardants of the organic or inorganic type, metallic pigments and/or metal plates, pigments and/or organic or inorganic pearly plates.

A further object of the present invention relates to artificial marble or granite consisting of the above composition.

The present invention also relates to a process for the preparation of artificial marble or granite which comprises:

(a) preparation of the composition forming artificial marble or granite by mixing the ingredients;

(b) pouring of the composition obtained in step (a) into a mould and its compacting, optionally operating under vacuum to expel any entrapped air;

(c) polymerization of the organic matrix polymerizable by means of suitable thermal treatment obtaining a panel or block; and

(d) finishing of the panel or block obtained in step (c) .

In particular, step (a) of the above process can be carried out in a normal open-topped planetary mixer for heterogeneous blends.

In step (b) the mould can be treated with a detaching agent, preferably with a detaching agent of the siliconic type; or, said mould can be previously protected with a sheet of polyethylene, polyvinylchloride or other suitable material. The mould has the shape of a flat plate or parallelepiped block and can be subjected to vacuum to favour the evacuation of the interstitial air during or after compacting. The compacting can be effected by shaking or vibration.

Step (c) can be carried out directly in the mould, or outside the mould, when the damp panel coated with the protective sheet can be extracted from the mould as it is self-consistent.

In said step (c), the polymerization of the poly(allyl carbonate) (A) can be carried out at a temperature ranging from 100°C to 150°C, preferably from 120°C to 140°C, for a time ranging from 15 minutes to 3 hours, preferably from 20 minutes to 1 hour. During the polymerization the surfaces of the panel or block are not in contact with air to prevent the inhibiting effect of oxygen on the radicalic polymerization.

Finally, step (d) may comprise operations such as the cutting and sizing of the panel or block and their smoothing and polishing. In particular, in the case of artificial granite, the cutting can be effected with diamond tools and the polishing with abrasive elements based on silicon or boron carbide.

The above process is particularly advantageous when low quantities of poly(allyl carbonate) (A) are used, generally less than 10% by weight, i.e. just sufficient to wet the mineral filler. In particular, in step (b), the compacting, which can be carried out according to known techniques operating under vacuum and with vibro-compression for short

periods of time (for example, about 60 seconds), allows the production of a panel of a plastic consistency, only slightly wet and self-consistent, which can be easily handled before the polymerization of the poly(allyl carbonate) (A) effected in step (c).

The artificial marble or granite which, as specified above, forms a further object of the present invention, has an excellent aesthetic value, with patterns and chromatic shades which cannot always be found in natural materials, and with various advantages with respect to the products of the known art. In particular, compared with analogous marble and granite based on polyester resins and poly(allyl carbonate), they have:

- smoothed and polished surfaces with a better aesthetic appearance; said surfaces are, in fact, shiny, do not yellow and have a lesser "orange peel" effect;
- an improved thermal resistance, in particular to lighted cigarette marks;
- an improved resistance to chemical agents, solvents and staining agents in general; and above all,
- an improved external aging resistance, in particular to the action of UV radiation.

The mechanical resistance of the above artificial marble or granite is similar to that of the products obtained from polyester resins and is about 2-3 times higher than that of the corresponding natural material from which the grosser particle-sized mineral filler derives. For example, the modulus of rupture in bending of the above artificial marble or granite is in the order of 40-70 MPa whereas that of the corresponding natural material is in the order of 15-20 MPa.

With respect to the above-mentioned known art, in which the use of a polymerizable poly(allyl carbonate) is described, the composition forming artificial marble or granite, object of the present invention, has a series of advantages mainly deriving from the use of the peroxide polymerization initiator belonging to the group of perketals (C). Said polymerization initiator, in fact, unlike other peroxides used in the known art, is liquid and easily dissolves in the resin and has a good stability up to 30°C, thus avoiding prepolymerization phenomena which arise when using more reactive peroxides such as, for example, percarbonates. The high reactive oxygen content of this polymerization initiator allows it to be used in very low concentrations (in the order of 1%-2% by weight, as described above). The polymerization temperature, as specified above, can reach 140°C and the polymerization reaction is consequently extremely rapid, being completed in 20-60 minutes (as described above).

The artificial marble or granite obtained according to the present invention also has an optimum processability and, as already mentioned, an excellent UV aging resistance which is much higher than that of the artificial marble and granite produced using different polymerization initiators such as, for example, percarbonates.

Some illustrative but non-limiting examples are provided for a better understanding of the present invention and for its embodiment.

EXAMPLE 1

The poly(allyl carbonate) (A) adopted is the liquid product consisting of a mixture of monomer and oligomers obtained from the transesterification reaction between diallyl carbonate and a mixture of diethylene glycol and pentaerythritol in a weight ratio equal to 80/20, with a molar ratio between diallyl carbonate and the sum of the polyols equal to 2.5/1.

The product thus obtained has a density of 1.215 at 20°C and a viscosity of 265 cSt at 25°C. 1.6 g of γ-methacryloxypropyltriethoxysilane, 0.8 g of Uvasil® 299 LM, 0.8 g of Lowilite® 22 and 2.4 g of 1,1-di-(t-butylperoxy)-3,3,5-trimethylcyclohexane are dissolved in 160 g of said product, obtaining a solution.

1 kg of ground Serizzo Formazza commercial granite is mixed with the above solution for 30 minutes in a 2 1 polyethylene glass, slanting and rotating at a low rate.

The mixture thus obtained is charged into a flat open steel mould, with dimensions of 30x15 cm and a height of 2 cm, protected with a fine high density polyethylene sheet.

The mould is subjected for 30 minutes to medium frequency vibrations with a manual vibrator and subsequently, after being placed on an ultrasonic plate, to high frequency vibrations for about 30 minutes: in this way the heterogeneous and damp mass is made compact and continuous and the interstitial air pockets are removed. The mould is placed in an oven, at 130°C, for 1 hour.

The resulting panel, compact and perfectly hardened, is extracted from the mould, both sides are calibrated to a thickness of 12 mm, the edges are trimmed with diamond tools and the panel is smoothed on one side with a brush based on silicon carbide. This side is shiny, with a slight "orange peel" effect and has a continuous, flat and polished appearance similar to the commercial Serizzo Formazza granite.

EXAMPLE 2

1 kg of ground commercial granite Imperial Red of Sweden is mixed with the same solution described in

Example 1, under the same operating conditions.

The mixture obtained is charged into a mould and subjected to vibration and polymerization operating under the same conditions described in Example 1.

The resulting panel, compact and perfectly hardened, is extracted from the mould, both sides are calibrated to a thickness of 12 mm, the edges are trimmed with diamond tools and the panel is smoothed on one side with a brush based on silicon carbide. This side is shiny, with a slight "orange peel" effect and has a continuous, flat and polished appearance similar to the commercial Red Imperial of Sweden granite.

EXAMPLE 3 - (comparative)

1 kg of a mixture of alumina trihydrate (60%) MARTINAL ON 320 (particle-size 15 μm - 25 μm), commercialized by MARTINSWERK, and quartz (40%) SIHELCO NW10 (particle size 30 μm- 40 μm), commercialized by EVS, is mixed with 163.2 g of the same solution described in Example 1 in which the polymerization initiators indicated in Table 1 are used. Said Table 1 also indicates the quantities (g) of said initiators used, the polymerization temperature (°C) and the time (hours): the mixing takes place under the same conditions described in Example 1.

The mixture obtained is charged into a mould and subjected to vibration under the same conditions described in Example 1. The mould is placed in an oven and the polymerization takes place under the conditions specified in Table 1.

The resulting panel, compact and perfectly hardened, is extracted from the mould, both sides are calibrated to a thickness of 12 mm, the edges are trimmed with diamond tools and the panel is smoothed on one side with a brush based on silicon carbide.

The marble panels thus obtained are subjected to accelerated aging in UV-CON of Atlas by effecting repeated cycles of 8 hours of UV light at 60°C and 4 hours of darkness at 40°C with condensation.

The total ΔE* colour variation is measured according to the following formula:

$$\Delta E^* = [\ (\Delta a^*)^2 + (\Delta b^*)^2 + (\Delta L^*)^2]^{1/2}$$

wherein a*, b* and L* are sizes which define the Colour Space on Cartesian coordinates according to the CIE 1976 scale. The results obtained are indicated in Table 1.

The comparative data specified in Table 1 clearly demonstrate that the sample of artificial marble obtained using the polymerization initiator according to the present invention (1,1-di-(t-butylperoxy)-3,3,5-trimethycyclohexane) has, after 1500 in UV-CON, a ΔE* 2 to 3 times lower than that of the artificial marble obtained using the polymerization initiators of the known art.

TABLE 1

| AGING TESTS IN UV-CON: TOTAL COLOUR VARIATION (ΔE*) AT INCREASING EXPOSURE TIMES | | | | | | | | |
|---|---|---|---|---|---|---|---|---|
| Initiator type | Initiator quantity (g) | Polymerization temperature (°C) | Polymerization time (hrs) | (ΔE*) (hours) | | | | |
| | | | | 250 | 500 | 750 | 1000 | 1500 |
| (1) | 2.4 | 130 | 1 | 0.7 | 1.1 | 1.9 | 2.5 | 5.1 |
| (2) | 8.8 | 60 | 9 | 0.3 | 0.9 | 2.2 | 4.2 | 10.1 |
| (3) | 8.8 | 65 | 11 | 0.9 | 1.5 | 2.5 | 4.7 | 14.3 |

(1): 1,1-bis(t-butylperoxy)-3,3,5-trimethylcyclohexane;
(2): dicyclohexyl peroxydicarbonate;
(3): bis(4-t-butylcyclohexyl)peroxydicarbonate.

## Claims

1. A composition forming artificial marble or granite, comprising:

   (A) a liquid and polymerizable poly(allyl carbonate) of a polyol or a mixture of polyols, as organic ligand; and
   (B) a mineral filler of a carbonate nature in the case of marble, of a silicate or silica nature in the case of granite;

**characterized in that** the polymerization of the poly(allyl carbonate) (A) is carried out in the presence of a peroxide polymerization initiator belonging to the group of perketals (C).

**2.** The composition forming artificial marble or granite according to claim 1, wherein the poly(allyl carbonate) (A) is present in a quantity ranging from 4 to 50 parts by weight for every 100 parts by weight of the sum of the poly(allyl carbonate) (A) and mineral filler (B).

**3.** The composition forming artificial marble or granite according to claim 2, wherein the poly(allyl carbonate) (A) is present in a quantity ranging from 6 to 20 parts by weight for every 100 parts by weight of the sum of the poly(allyl carbonate) (A) and mineral filler (B).

**4.** The composition forming artificial marble or granite according to any of the previous claims, wherein the poly(allyl carbonate) (A) consists of at least one poly(allyl carbonate) of a polyol containing from 2 to 6 hydroxyl groups in the molecule, in the form of a monomer and/or oligomer.

**5.** The composition forming artificial marble or granite according to any of the previous claims, wherein the polyol is selected from:

- ethylene glycol, propylene glycol, diethylene glycol, dipropylene glycol, triethylene glycol, tetraethylene glycol, pentanediol, hexanediol, dimethanolcyclohexane, neopentyl glycol, tricyclic dimethanol decane;
- glycerol, trimethylolpropane, tris(hydroxyethyl)isocyanurate;
- pentaerythritol, di- or tri-methylolpropane;
- dipentaerythritol.

**6.** The composition forming artificial marble or granite according to claim 1, wherein the poly(allyl carbonate) is selected from mixed poly(allyl carbonates), i.e. containing radicals of two or more different polyols in the same molecule.

**7.** The composition forming artificial marble or granite according to claim 1, wherein the poly(allyl carbonate) (A) is bis(allyl carbonate) of diethylene glycol monomer having formula (I):

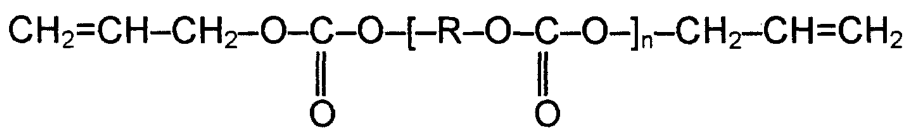

(I)

wherein R is the diethylene glycol radical and n is 1.

**8.** The composition forming artificial marble or granite according to claim 1, wherein the poly(allyl carbonate) (A) is the transesterification product of a mixture of diallyl carbonate, diethylene glycol and tris(hydroxyethyl)isocyanurate.

**9.** The composition forming artificial marble or granite according to claim 1, wherein the poly(allyl carbonate) (A) is the transesterification product of a mixture of diallyl carbonate, diethylene glycol and pentaerythritol.

**10.** The composition forming artificial marble or granite according to any of the previous claims, wherein the mineral fillers (B) are carbonate, silicate or silica mineral fillers.

**11.** The composition forming artificial marble or granite according to claim 10, wherein the mineral fillers (B) are mineral fillers having a gross particle size selected from: natural marble, granite, siliceous sand.

**12.** The composition forming artificial marble or granite according to claim 10, wherein the mineral fillers (B) are mineral fillers having a fine particle size selected from: products deriving from the fine grinding of natural marble, granite or siliceous sand, or, quartz, alumina hydrate, talc, silicas, graphite, or their mixtures.

**13.** The composition forming artificial marble or granite according to claim 12, wherein the mineral fillers (B) having a fine particle size are substituted (up to 50% by weight) by glass fiber, of the short or long type.

**14.** The composition forming artificial marble or granite according to claim 10, wherein the mineral fillers (B) are pretreated with compatibilizing agents belonging to the group of silanes such as, γ-methacryloxypropyltriethoxysilane, vinyltriethoxysilane, trimethylsilane.

**15.** The composition forming artificial marble or granite according to any of the previous claims, wherein the peroxide polymerization initiators belonging to the group of perketals (C) are selected from compounds belonging to the group of gem-diperoxides having general formula (II):

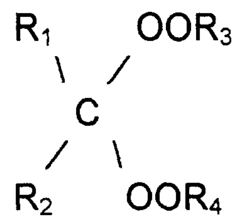

(II)

wherein $R_3$ represents a linear or branched tertiary alkyl group such as, t-butyl or t-amyl; $R_1$ and $R_2$ each independently represent a linear or branched alkyl group such as, methyl, ethyl, propyl and butyl, said alkyl group possibly carrying non-interfering functional groups such as, an alkyl ester group at the chain-end; or, $R_1$ and $R_2$, together with the carbon atom to which they are bound, form a cycloalkylene group such as, a cyclohexylidene group, said cycloalkylene group optionally carrying one or more alkyl substituents such as, from 1 to 3 methyl groups.

**16.** The composition forming artificial marble or granite according to claim 15, wherein the peroxide polymerization initiators belonging to the group of perketals (C) are: 2,2-di-(t-butylperoxy)butane, n-butyl-4,4-di-(t-butylperoxy) valerate, ethyl-3,3-di-(t-butyl-peroxy)valerate, 1,1-di-(t-butylperoxy)cyclohexane, 1,1-di-(t-butylperoxy)-2-methylcyclohexane, 1,1-di-(t-butyl-peroxy)-3,3,5-trimethylcyclohexane, 1,1-di-(t-amylper-oxy)cyclohexane, 1,1-di-(t-amylperoxy)-2-methylcyclohexane.

**17.** The composition forming artificial marble or granite according to claim 15, wherein the peroxide polymerization initiators belonging to the group of perketals (C) are cyclic gem-diperoxides and cyclic gem-triperoxides such as, 3,3,6,6-tetramethyl-1,2,4,5-tetraoxane, 3,6-diethyl-3,6-dimethyl-1,2,-4,5-tetraoxane, 7,8,15,15-tetraoxadispiro [5.2.5.2]-hexadecane, 3,3,6,6,9,9-hexamethyl-1,2,4,5-tetraoxycyclononane.

**18.** The composition forming artificial marble or granite according to any of the previous claims, wherein the peroxide polymerization initiators belonging to the group of perketals (C) are present in a quantity ranging from 0.5% to 5%.

**19.** The composition forming artificial marble or granite according to claim 18, wherein the peroxide polymerization initiators belonging to the group of perketals (C) are present in a quantity ranging from 1% to 2% by weight.

**20.** The composition forming artificial marble or granite according to any of the previous claims, wherein effective quantities of UV light stabilizers are present, such as hydroxybenzophenones, benzotriazoles, sterically hindered amines (HALS) of the monomeric and/or polymeric type, or their mixtures.

**21.** The composition forming artificial marble or granite according to any of the previous claims, wherein limited quantities are present of one or more silanes in substitution of or in addition to those deposited on the mineral filler; or other additives such as: dispersing and wetting agents of mineral fillers, deaerating agents, viscosity-depressing agents, antisediment agents, internal detaching agents, titanium dioxide and coloured pigments of the organic or inorganic type, flame-retardants of the organic or inorganic type, metallic pigments and/or metal plates, pigments and/or organic or inorganic pearly plates.

**22.** A process for the preparation of artificial marble or granite which comprises:

(a) preparation of the composition forming artificial marble or granite by mixing the ingredients;
(b) pouring of the composition obtained in step (a) into a mould and its compacting, optionally operating under vacuum to expel any entrapped air;
(c) polymerization of the organic matrix polymerizable by means of suitable thermal treatment obtaining a panel or block; and
(d) finishing of the panel or block obtained in step (c).

European Patent Office

# EUROPEAN SEARCH REPORT

Application Number
EP 01 20 1263

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 595 424 A (ENICHEM SINTESI) 4 May 1994 (1994-05-04) * claim 14 * | 22 | C04B26/18 C08G64/02 |
| Y | * claims 1,11 * | 1-21 | |
| Y | EP 0 492 555 A (ENICHEM SINTESI) 1 July 1992 (1992-07-01) * claims 1,4,5 * | 1-21 | |

TECHNICAL FIELDS SEARCHED (Int.Cl.7)
C04B
C08G

The present search report has been drawn up for all claims

| Place of search | Date of completion of the search | Examiner |
|---|---|---|
| MUNICH | 28 August 2001 | Rousseau, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 20 1263

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2001

| Patent document cited in search report | Publication date | Patent family member(s) | Publication date |
|---|---|---|---|
| EP 0595424 A | 04-05-1994 | IT 1257700 B | 01-02-1996 |
| | | AT 166076 T | 15-05-1998 |
| | | AU 660565 B | 29-06-1995 |
| | | AU 5026193 A | 12-05-1994 |
| | | BR 9304435 A | 16-08-1994 |
| | | CN 1087355 A | 01-06-1994 |
| | | DE 69318511 D | 18-06-1998 |
| | | DE 69318511 T | 26-11-1998 |
| | | DK 595424 T | 18-01-1999 |
| | | ES 2115007 T | 16-06-1998 |
| | | JP 7002938 A | 06-01-1995 |
| | | SG 74542 A | 22-08-2000 |
| | | US 5599876 A | 04-02-1997 |
| EP 0492555 A | 01-07-1992 | IT 1244480 B | 15-07-1994 |
| | | AT 112243 T | 15-10-1994 |
| | | CA 2058237 A | 22-06-1992 |
| | | DE 69104338 D | 03-11-1994 |
| | | DE 69104338 T | 23-03-1995 |
| | | ES 2064868 T | 01-02-1995 |
| | | JP 5058697 A | 09-03-1993 |
| | | US 5280051 A | 18-01-1994 |

EPO FORM P0459

For more details about this annex : see Official Journal of the European Patent Office, No. 12/82